# EUROPÄISCHE PATENTANMELDUNG

(11) **EP 3 392 125 A1**
(43) Veröffentlichungstag der Anmeldung: **24.10.2018**
(21) Anmeldenummer: 18159538.0
(22) Anmeldetag: 01.03.2018
(51) Int. Cl.: B62D 65/18

(54) **VERFAHREN UND FÖRDERSYSTEM ZUM GLEICHZEITIGEN TRANSPORT VON LANGGESTRECKTEN WERKSTÜCKEN UND WERKERN IN EINER FERTIGUNGSLINIE**

(30) Priorität: 13.04.2017 DE 102017108023
(71) Anmelder: Eisenmann SE, 71032 Böblingen (DE)
(72) Erfinder: Herwig, Gernot, 71088 Holzgerlingen (DE)
(74) Vertreter: Ostertag & Partner Patentanwälte mbB

(57) **Zusammenfassung**

Gegenstand der Erfindung ist ein Verfahren zum gleichzeitigen Transport von zu montierenden Kraftwagen oder anderen langgestreckten Werkstücken (18) und Werkern (20) in einer Fertigungslinie, die einen geradlinigen Fertigungsabschnitt (14) aufweist. Mehrere Förderfahrzeuge (12), die jeweils eine sich über die gesamte Fahrzeuglänge hinweg erstreckende und für Werker begehbare Montageplattform (16) haben, bewegen sich in dem geradlinigen Fertigungsabschnitt (14) gemeinsam entlang einer Förderrichtung (22) und bilden einen Verband, bei dem die Montageplattformen (16) benachbarter Förderfahrzeuge (12) zumindest im Wesentlichen spaltfrei aneinander angrenzen. Erfindungsgemäß werden die Werkstücke (18) so auf den Montageplattformen (16) angeordnet, dass eine Längsrichtung (32) der Werkstücke (18) in einem Winkel zwischen 25° und 65° und vorzugsweise von etwa 45° zur Förderrichtung (22) angeordnet ist. Dadurch wird die Fläche auf den Montageplattformen besser ausgenutzt. Außerdem verringern sich die von den Werkern entlang der Förderrichtung (22) zurückzulegenden Wege beim Wechseln zwischen den Montageplattformen (16).

## Beschreibung

### HINTERGRUND DER ERFINDUNG

### 1. Gebiet der Erfindung

Die Erfindung betrifft ein ein Verfahren und ein Fördersystem zum gleichzeitigen Transport von Kraftwagen oder anderen langgestreckten Werkstücken und Werkern in einer Fertigungslinie einer Fertigungsstätte. Derartige Fördersysteme werden insbesondere bei der Endmontage von Kraftwagen oder von Maschinen eingesetzt, die in großen Stückzahlen hergestellt werden.

### 2. Beschreibung des Standes der Technik

Bei der Endmontage von Werkstücken werden häufig Fördersysteme eingesetzt, bei denen die Werker über einen längeren Zeitraum gemeinsam mit den Werkstücken transportiert werden. Auf diese Weise können die Werker Arbeiten an den Werkstücken vornehmen, ohne neben den Werkstücken herlaufen zu müssen.

Die Förderfahrzeuge dieser Fördersysteme weisen eine Werkstückaufnahme zur Befestigung des Werkstücks, eine für die Werker begehbare Montageplattform und ein Fahrwerk mit Rädern oder Kufen auf Rollenleisten auf. Üblicherweise bilden die Förderfahrzeuge einen Schubverband, während sie die Werker gemeinsam mit den Werkstücken transportieren. Das jeweils letzte Förderfahrzeug schiebt dabei die vorausfahrenden Förderfahrzeuge von hinten an, wobei es durch ortsfeste externe Antriebsmittel angetrieben wird. Bei diesen Antriebsmitteln kann es sich beispielsweise um Reibräder handeln, die von außen an den Längsseiten der jeweils letzten Montageplattform angreifen und auf diese Weise die für die Vorwärtsbewegung des gesamten Schubverbands erforderliche Schubkraft aufbringen. Durch das Anschieben von hinten wird sichergestellt, dass die Montageplattformen innerhalb des Schubverbands spaltfrei aneinander angrenzen, so dass die Werker gefahrlos auf benachbarte Montageplattformen überwechseln könne. Am Ende eines Fertigungsabschnitts wird der Schubverband wieder aufgelöst. Hierzu werden die Werkstücke üblicherweise von den Förderfahrzeugen abgenommen. Die leeren Förderfahrzeuge werden anschließend in einer Umsetzstation vertikal oder horizontal umgesetzt und laufen auf einer anderen Förderstrecke leer zurück. Anstatt den Schubverband dauerhaft aufzulösen, können die Förderfahrzeuge auch kurzfristig vereinzelt und auf einer Kurvenfahrt zu einem weiteren Fertigungsabschnitt gefördert werden, wo sie erneut einen Schubverband bilden.

Aus der DE 40 20 286 C2 ist ein Fördersystem dieser Art bekannt. Die dort beschriebenen Förderfahrzeuge weisen zusätzlich eigene Antriebe auf. Dadurch können sich die Förderfahrzeuge zwischen den Fertigungsabschnitten selbstständig fortbewegen. Sobald ein Förderfahrzeug in den Schubverband aufgenommen ist, wird der Eigenantrieb abgeschaltet. Eine Besonderheit bei den Förderfahrzeugen dieses bekannten Fördersystems besteht darin, dass die Antriebsräder um 90° Grad eingeschlagen werden können. Dadurch können die Förderfahrzeuge quer zur nächsten Fertigungsabschnitt fahren, um dort in den nächsten Schubverband aufgenommen zu werden.

Ein ähnliches Fördersystem ist aus der DE 10 2005 034 582 A1 bekannt. Auch dort verfügen die Förderfahrzeuge über einen eigenen Antrieb, der aber auch zur Förderung im Schubverband verwendet wird. Auf die externen ortsfesten Antriebsmittel kann dadurch verzichtet werden. Die Förderfahrzeuge müssen deswegen nicht den großen Längs- und Querkräften standhalten, die durch das Fahren im Schubverband durch die seitlichen Reibräder hervorgerufen werden. Dadurch können die Förderfahrzeuge leichter gebaut werden.

Bei Fertigungslinien für die Montage von Kraftwagen haben die geradlinigen Fertigungsabschnitte, innerhalb derer sich die Förderfahrzeuge im Verband bewegen, in der Regel eine vorgegebene Breite, die zum Beispiel 8 m beträgt. Innerhalb dieser Breite müssen nicht nur die Förderfahrzeuge untergebracht werden, sondern auch für die Werker begehbare Randstreifen sowie Materialversorgungszonen für die Aufbewahrung der zu montierenden Teile und für die benötigten Werkzeuge. Wegen der begrenzten Breite der Fertigungsabschnitte werden die zu montierenden Kraftwagen deswegen so auf den Montageplattformen befestigt, dass die Längsrichtung der Kraftwagen parallel zur Förderrichtung ausgerichtet ist. Die Montageplattformen sind rechtecktig und so dimenionsiert, dass um das Werkstück herum ein begehbarer Abschnitt verbleibt. Wegen der langgestreckten Form der Kraftwagen verläuft folglich auch die Längsachse der Montageplattformen parallel zur Förderrichtung. Auf diese Weise beanspruchen die Förderfahrzeuge meist nicht mehr als 50% der zur Verfügung stehenden Breite des Fertigungsabschnitts.

Nachteilig bei den bekannten Fördersystemen ist allerdings, dass infolge der Längsausrichtung der Kraftwagen in Förderrichtung die Wegstrecken zwischen zwei aufeinanderfolgenden Kraftwagen lang sind. Da die Werker häufig nicht über die gesamte Länge des Fertigungsabschnitts hinweg auf einer bestimmten Montageplattform bleiben, sondern diese wechseln, müssen die Werker entsprechend große Strecken zurücklegen, um die Arbeit an einem Kraftwagen fortsetzen zu können, der in Förderrichtung gesehen weiter zurückliegt.

Entsprechendes gilt auch für andere langgestreckte Werkstücke wie Anhänger und andere Fahrzeuge.

### ZUSAMMENFASSUNG DER ERFINDUNG

Aufgabe der Erfindung ist es, ein Verfahren und ein Fördersystem zum gleichzeitigen Transport langgestreckten Werkstücken und Werkern in einer Fertigungslinie einer Fertigungsstätte anzugeben, bei denen die zur Verfügung stehende Fläche besser als bisher genutzt wird und die von den Werkern zurückzulegenden Wege entlang der Fertigungslinie kürzer sind als bisher.

Hinsichtlich des Verfahrens wird diese Aufgabe durch ein Verfahren zum gleichzeitigen Transport von langgestreckten Werkstücken und Werkern in einer Fertigungslinie gelöst, die einen geradlinigen Fertigungsabschnitt aufweist. Mehrere Förderfahrzeuge, die jeweils eine sich über die gesamte Fahrzeuglänge erstreckende und für Werker begehbare Montageplattform haben, bewegen sich in dem geradlinigen Fertigungsabschnitt gemeinsam entlang einer Förderrichtung und bilden dabei einen Verband, bei dem die Montageplattformen benachbarter Förderfahrzeuge zumindest im Wesentlichen spaltfrei aneinander angrenzen. Erfindungsgemäß sind die Werkstücke so auf den Montageplattformen angeordnet, dass eine Längsrichtung der Werkstücke in einem Winkel zwischen 25° und 65° und vorzugsweise zwischen 40° und 50° zur Förderrichtung angeordnet ist.

Hinsichtlich des Fördersystems wird die Aufgabe durch ein Fördersystem zum Transport von langgestreckten Werkstücken und Werkern in einer Fertigungslinie gelöst, die einen geradlinigen Fertigungsabschnitt aufweist. Das Fördersystem weist mehrere Förderfahrzeuge auf, die jeweils eine Werkstückaufnahme und eine sich über die gesamte Fahrzeuglänge hinweg erstreckende und für Werker begehbare Montageplattform haben. Die Förderfahrzeuge bewegen sich in dem geradlinigen Fertigungsabschnitt gemeinsam entlang einer Förderrichtung und bilden einen Verband, bei dem die Montageplattformen benachbarter Förderfahrzeuge zumindest im Wesentlichen spaltfrei aneinander angrenzen. Erfindungsgemäß ist die Werkstückaufnahme so ausgebildet, dass eine Längsrichtung der darauf zu befestigenden Werkstücke einen Winkel zwischen 25° und 65° und vorzugsweise zwischen 40° und 50° zur Förderrichtung angeordnet ist.

Aufgrund der erfindungsgemäßen Schrägstellung der Werkstücke können die Montageplattformen in Förderrichtung kürzer gebaut werden. Dadurch verringern sich die von den Werkern entlang der Förderrichtung zurückzulegenden Wege beim Wechseln zwischen den Montageplattformen. Noch kürzere Wege für die Werker ließen sich theoretisch erreichen, wenn die Längsachsen der Werkstücke senkrecht zur Förderrichtung angeordnet wären. Dies würde jedoch so breite Förderfahrzeuge erfordern, dass seitlich der Förderfahrzeuge kaum noch Platz für die Aufbewahrung von Teilen und Werkzeugen zur Verfügung stände. Die erfindungsgemäße Schrägstellung stellt daher einen optimalen Kompromiss zwischen Verkürzung der Baulänge in Förderrichtung einerseits und Ausnutzung der zur Verfügung stehenden Fläche quer zur Förderrichtung dar.

Die Werkstückaufnahmen, die häufig als Hubtisch ausgebildet sind, weisen in der Regel mehrere Fixierelemente zum formschlüssigen Fixieren des Werkstücks auf der Werkstückaufnahme auf. Bei den Fixierelementen kann es sich beispielsweise um prismenförmige oder konische Ausnehmungen handeln, in die komplementär geformte Vorsprünge eingreifen, die am Werkstück oder einem zusätzlichen Werkstückträger ausgebildet sind.

Zur Aufnahme von langgestreckten Werkstücken sind meist auch die Werkstückaufnahmen langgestreckt und haben eine Längsrichtung, in der ihre Abmessungen größer sind als in einer senkrecht dazu verlaufenden Querrichtung. Damit das Werkstück schräg zur Förderrichtung ausgerichtet werden kann, haben solche langgestreckten Werkstückaufnahmen eine Längsrichtung, die ebenfalls in einem Winkel zwischen 25° und 65° und vorzugsweise zwischen 40° und 50° zur Förderrichtung angeordnet ist.

Durch die erfindungsgemäße schräge Anordnung der Werkstücke auf den Montageplattformen müssen diese eine größere Breite als bisher haben. Dies führt zu einer Form der Montageplattformen, die zumindest annähernd quadratisch ist und vorzugsweise die Form eines Rechtecks mit einem kleinen Aspektverhältnis V < 1,2 haben. Als Aspektverhältnis bezeichnet man das Verhältnis von Länge zu Breite eines Rechtsecks. Die Längsachsen der Werkstücke verlaufen dann vorzugsweise entlang einer Flächendiagonale der Montageplattformen.

Zur Förderung von zu montierenden Personenkraftwagen können beispielsweise Montageplattformen verwendet werden, welche die Form eines Quadrats mit einer Seitenlänge von 5 m haben. In einem Winkel von 45° zur Förderrichtung orientierte Personenkraftwagen können dann so transportiert werden, dass die Werker auch die Stirnflächen der Personenkraftwagen problemlos erreichen können. Zu beiden Seiten einer solchen Montageplattform verbleiben dann noch Materialversorgungszonen mit einer Breite von jeweils 1,5 m, was in den in aller Regel ausreichend ist.

Durch die Schrägstellung der Werkstücke auf den Montageplattformen werden diese durch die Längsachse der Werkstücke in jeweils zwei Arbeitsbereiche unterteilt, die zumindest im Wesentlichen dreieckig sind. Vorzugsweise ist in jedem der beiden Arbeitsbereiche mindestens eine Materialversorgungseinrichtung zur Aufbewahrung der zu montierenden Einzelteile und zu deren Entnahme durch den Werker angeordnet. Idealerweise wird die Materialversorgungseinrichtung angrenzend an die Ecke oder in deren unmittelbarer Nähe angeordnet. Dadurch verbleibt zwischen der Materialversorgungseinrichtung und dem Werkstück genügend Platz für den Werker. Bei herkömmlichen Fördersystemen ist der Platz zwischen derartigen Materialversorgungseinrichtung und dem Werkstück häufig sehr schmal, so dass sich der Werker in diesem Bereich besonders umsichtig bewegen muss. In den dreieckigen Arbeitsbereichen des erfindungsgemäßen Fördersystems kann sich der Werker wegen der günstigeren Anordnung des Werkstücks auf der Montageplattform somit freier und sicherer bewegen, als dies bei bisherigen Fördersystem der Fall ist.

Wenn die Längsachsen der Werkstücke parallel in dem geradlinigen Förderabschnitt parallel zueinander angeordnet sind, grenzen die großen dreickigen Arbeitsbereiche der Montageplattformen an die kleineren Arbeitsbereiche an, die sich in Längsrichtung vor und hinter den Werkstücken auf den jeweils benachbarten Montageplattformen befinden. Auf diese Weise lassen sich die Montageplattformen noch besser fahrzeugübergreifend benutzen, als dies bei den bislang bekannten Fördersystemen dieser Art der Fall ist.

Vor allem Kraftwagen, aber auch andere Werkstücke werden in der Regel von Hängebahnen oder ähnlichen Fördereinrichtungen gefördert, bevor sie auf den Montageplattformen der Förderfahrzeuge abgesetzt werden. In diesen Fördereinrichtungen werden die Werkstücke meist so gefördert, dass die Längsrichtung der Werkstücke parallel zur momentanen Förderrichtung ausgerichtet ist. Falls diese Förderrichtung genau parallel zu der Richtung verläuft, entlang der die Längsachse der Werkstücke auf den Montageplattformen ausgerichtet sein soll, können die Werkstücke einfach von der Fördereinrichtung auf den Montageplattformen abgesetzt werden und befinden sich dann bereits in der erfindungsgemäßen Schrägstellung.

Wegen baulicher Beschränkungen ist es jedoch in den meisten Fällen nicht möglich, die Förderrichtung der Fördereinrichtung in dieser Weise auszurichten. In diesen Fällen müssen die Werkstücke entweder bei der Übergabe von der Fördereinrichtung an die Förderfahrzeuge oder kurz vor dem Einfahren in den geradlinigen Fertigungsabschnitt um eine vertikale Achse gedreht werden. Zu diesem Zweck können die Förderfahrzeuge eine Werkstückaufnahme haben, die um eine vertikale Achse drehbar ist. Das Werkstück wird dann von der Fördereinrichtung auf der Werkstückaufnahme abgesetzt und auf dieser so lange gedreht, bis das Werkstück die gewünschte Schrägstellung erreicht hat.

Um die Förderfahrzeuge möglichst einfach und leicht konstruieren zu können, kann es jedoch zweckmäßiger sein, die Werkstücke bereits vor dem Aufsetzen auf der Werkstückaufnahme zu drehen. Auf eine Drehmechanik für die Werkstückaufnahme kann dann verzichtet werden. Um die Drehung des Werkstücks vor dem Befestigen auf die Werkstückaufnahme zu bewirken, kann das Fördersystem eine Dreheinrichtung aufweisen, die dazu eingerichtet ist, das Werkstück um eine vertikale Achse zu drehen.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: ein aus dem Stand der Technik bekanntes Fördersystem, bei dem mehrere Förderfahrzeuge gemeinsam einen Schubverband bilden;
- Figur 2: ein aus dem Stand der Technik bekanntes Fördersystem, bei dem die Montageplattformen im Vergleich zu dem in der Figur 1 gezeigten Fördersystem schmaler sind;
- Figur 3: ein erfindungsgemäßes Fördersystem, bei dem zu montierende Kraftwagen schräg auf den Montageplattformen angeordnet sind;
- Figur 4: einen Anfangsbereich eines geradlinigen Förderabschnitts, bei dem die Förderfahrzeuge vor dem Eintritt in den Verband seitlich versetzt werden;
- Figuren 5 und 6: eine Variante des in den Figuren 3 und 4 gezeigten Fördersystems, bei dem die Materialversorgungseinrichtungen auf den Montageplattformen anders angeordnet sind;
- Figuren 7 und 8: die in den Figuren 5 bzw. 6 gezeigten Fördersysteme, jedoch ohne die zu montierenden Kraftwagen;
- Figuren 9 und 10: einen Anfangsbereich eines geradlinigen Förderabschnitts zu zwei Zeitpunkten, zwischen denen ein Werkstück mithilfe einer Dreheinrichtung gedreht wurde, bevor es von einer Hängebahn auf der Werkstückaufnahme eines Förderfahrzeugs abgesetzt wird;
- Figuren 11 und 12: einen Anfangsbereich eines geradlinigen Förderabschnitts zu zwei Zeitpunkten, zwischen denen ein Werkstück mithilfe einer drehbaren Werkstückaufnahme gedreht wurde, nachdem es von einer Hängebahn auf der Werkstückaufnahme eines Förderfahrzeugs abgesetzt wurde.

### BESCHREIBUNG BEVORZUGTER AUSFÜHRUNGSBEISPIELE

### 7. Stand der Technik

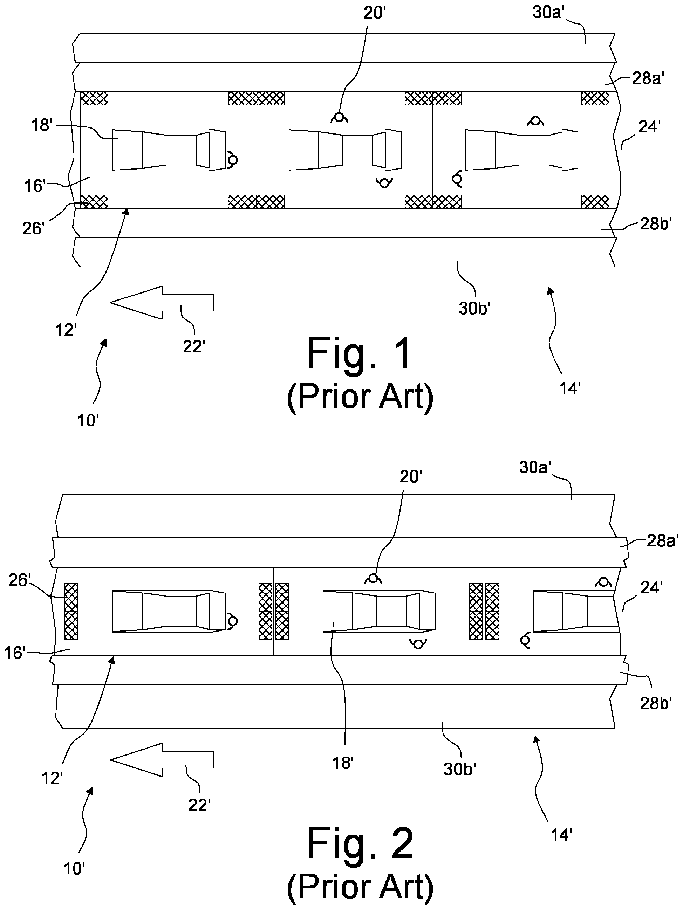

Die Figur 1 zeigt ein in einer schematischen Draufsicht ein aus dem Stand der Technik bekanntes Fördersystem 10', bei dem mehrere Förderfahrzeuge 12' in einem geradlinigen Fertigungsabschnitt 14' einer Fertigungslinie gemeinsam einen Schubverband bilden. In der Draufsicht erkennbar sind die Montageplattformen 16' der Förderfahrzeuge 12', die auf in der Draufsicht nicht erkennbaren Fahrgestellen montiert sind. Jede Montageplattform 16' trägt einen zu montierenden Kraftwagen 18' und ist für Werker 20' begehbar. Die Montageplattformen 16' haben jeweils eine rechteckige Form, wobei die Längsachsen 24' der Montageplattformen 16' fluchten und parallel zu einer mit einem Pfeil 22' angedeuteten Förderrichtung verlaufen, entlang der die Kraftwagen 18' von den Förderfahrzeugen 12' während der Montage gefördert werden.

Die Montageplattformen 16' tragen außerdem Materialversorgungseinrichtungen 26', die im dargestellten Beispiel jeweils an den Ecken der Montageplattformen 16' aufgestellt sind. Bei den Materialversorgungseinrichtungen 26' kann es sich beispielsweise um Gestelle handeln, in denen zu montierende Teile aufbewahrt sind, damit sie von den Werkern 20' entnommen werden können, oder um Paletten, auf denen Materialien gestapelt sind. Üblicherweise sind die Materialversorgungseinrichtungen 26' so ausgebildet, dass sie regelmäßig gegen neu befüllte Materialversorgungseinrichtungen 26' ausgetauscht werden können.

Zu beiden Seiten der Förderfahrzeuge 12' erstrecken sich Seitenbänder 28a', 28b', die im dargestellten Beispiel stationär sind. Die Seitenbänder 28a', 28b' können aber auch als Förderbänder ausgebildet sein, die sich mit der gleichen Geschwindigkeit wie die Montageplattformen 16' bewegen und sich auch auf der gleichen Höhe wie diese befinden. Die Seitenbänder 28a', 28b' vergrößern dann faktisch die den Werkern 20' zur Verfügung stehende Breite der Montageplattformen 16'.

Nach außen schließen sich an die Seitenbänder 28a', 28b' Materialversorgungszonen 30a', 30b' an, in der sich weitere Materialversorgungseinrichtungen, Werkzeuge oder Zwischenlager für zu montierende Teile und andere Materialien befinden können, wie dies an sich im Stand der Technik bekannt ist.

Im dargestellten Beispiel beträgt die Breite der Montageplattformen 16' vier Meter und die Breite der Seitenbänder 28a', 28b' und der Materialversorgungszonen 30a', 30b' jeweils einen Meter. Dadurch wird die insgesamt für die Fertigungslinie zur Verfügung stehende Breite von 8 m vollständig ausgenutzt, wobei die Montageplattformen 16' die Hälfte der zur Verfügung stehenden Breite für sich beanspruchen.

Die Figur 2 zeigt ein ähnliches Fördersystem 10', bei dem das Aspektverhältnis der rechteckigen Montageplattformen 16' größer ist. Bei diesem Beispiel haben die Montageplattformen 16' eine Breite von nur 3 m und dafür eine Länge von 8 m. Wegen der geringeren Breite der Montageplattformen 16' sind die Materialversorgungseinrichtungen 26' an den Stirnseiten der Montageplattformen 16' angeordnet. Der Vorteil bei dieser Dimensionierung der Montageplattformen 16' ist, dass die Materialversorgungszonen 30a', 30b' breiter als bei dem in der Figur 1 gezeigten Beispiel sein können. Durch die größere Länge der Montageplattformen 16' müssen jedoch Werker 20' längere Wege zurückgehen, wenn sie zwischen den Kraftwagen 18' wechseln möchten.

### 2. Erfindungsgemäßes Fördersystem

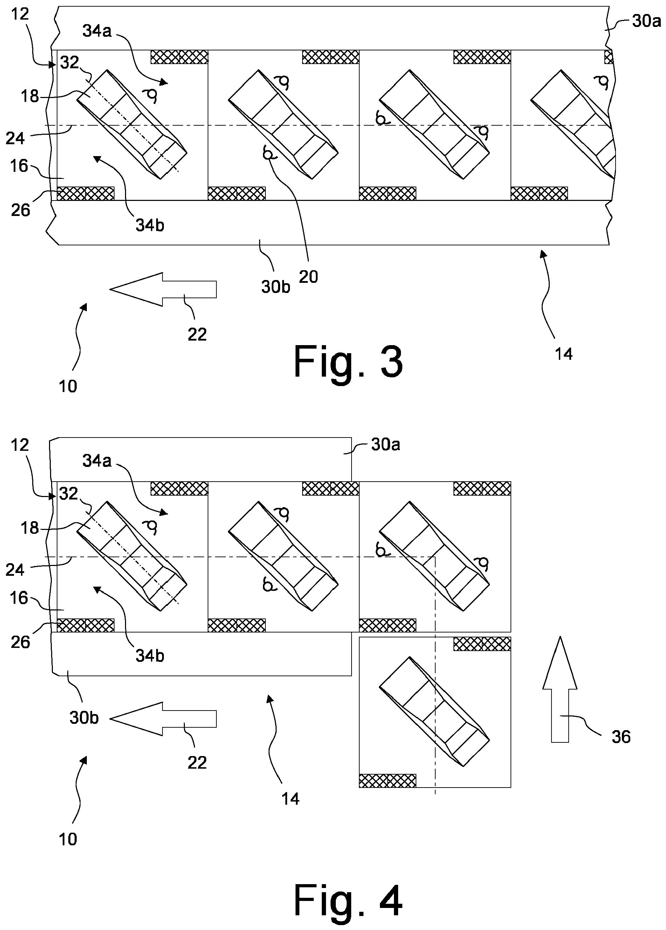

Die Figur 3 zeigt in einer schematischen Draufsich ein Fördersystem 10 gemäß einem ersten Ausführungsbeispiel der Erfindung. Die Montageplattformen 16 der Förderfahrzeuge 12 haben die Form eines Quadrats mit einer Seitenlänge von 5 m. Die zu montierenden Kraftwagen 18 sind so auf der Montageplattformen 16 angeordnet, dass die Längsachsen 32 der Kraftwagen 18 in einem Winkel von 45° zur Förderrichtung 22 angeordnet ist, wobei die Längsachsen 32 aller Kraftwagen 18 parallel zu einander verlaufen. Die jeweilige Längsachse 32 fällt dadurch im dargestellten Ausführungsbeispiel zumindest annähernd mit einer Flächendiagonale der Montageplattformen 16 zusammen.

Infolge dieser diagonalen Aufstellung der Kraftwagen 18 wird jede Montageplattform 16 durch den Kraftwagen 18 in zwei dreieckförmige Arbeitsbereiche 34a, 34b unterteilt, in denen sich die Werker 20 trotz der dort angeordneten Materialversorgungseinrichtungen 26 frei und sicher bewegen können. Bei dem in der Figur 3 dargestellten Ausführungsbeispiel sind die Materialversorgungseinrichtungen 26 entlang der in Förderrichtung 22 verlaufenden Seitenränder der Montageplattformen 16 angeordnet.

Vor und hinter den Kraftwagen 18 verbleibt auf jeder einzelnen Montageplattform 16 infolge der diagonalen Anordnung Platz für den Werker 20. Dieser Platz wird dadurch vergrößert, dass an die betreffenden Abschnitte die dreieckigen Arbeitsbereiche 34a, 34b der benachbarten Montageplattformen 16 angrenzen und für die Aufstellung von Material genutzt werden können. Dadurch können die Werker 20 die Montageplattformen 16 noch besser fahrzeugübergreifend nutzen, als dies bislang bei derartigen Fördersystemen möglich war.

Die Schrägstellung der Kraftwagen 18 erfordert eine größere Breite der Montageplattformen 16. Da die Werker aber in den dreieckigen Arbeitsbereichen 34a, 34b sehr viel Platz haben, kann auf die bislang notwendigen Seitenbänder 28a, 28b verzichtet werden. An die Montageplattformen 16 schließen sich deswegen im dargestellten Ausführungsbeispiel die Materialversorgungszonen 30a, 30b unmittelbar an. Bei einer Breite der Fertigungslinie von insgesamt 8 m können die Materialversorgungszonen 30a, 30b somit beim dargestellten Ausführungsbeispiel noch jeweils 1,5 m breit sein. In den Materialversorgungszonen 30a, 30b ist deswegen genau so viel Platz wie bei dem in der Figur 2 gezeigten Beispiel aus dem Stand der Technik, was dort aber nur durch Inkaufnahme sehr langer Montageplattformen 16 möglich ist.

Im Gegensatz dazu sind die erfindungsgemäßen Montageplattformen 16 bei dem in der Figur 3 dargestellten Ausführungsbeispiel um 37,5% kürzer als bei dem in der Figur 2 gezeigten Beispiel aus dem Stand der Technik. Wenn ein Werker 20 nur zwischen zwei benachbarten Montageplattformen wechselt, fällt dieser Unterschied von 3 m Länge vielleicht noch nicht ins Gewicht. Wenn ein Werker 20 jedoch beispielsweise 15 Förderfahrzeuge 12 zurückgehen muss, entspricht dies einer Verkürzung des zurückzulegenden Weges um 45 m, was sich für den Werker 20 spürbar bemerkbar macht.

Die Figur 4 zeigt den Beginn des Förderabschnitts 14, bei dem die Förderfahrzeuge 12 zunächst quer zur Förderrichtung 22 entlang der mit dem Pfeil 36 angedeuteten Querrichtung verfahren werden, bevor sie in den Fertigungsabschnitt 14 eintreten und ihre Bewegung entlang der Förderrichtung 22 beginnen. Die Förderfahrzeuge 12 verfügen zu diesem Zweck über omnidirektionale Fahrwerke, so dass sie die Förderrichtung ohne Kurvenfahrt um 90° verändern können. Wie in der Figur 4 zu erkennen ist, bleibt deswegen die Ausrichtung der Längsachsen 32 der Kraftwagen 18 auch beim Fördern entlang der Querrichtung 36 parallel zu den Längsachsen 32 der Kraftwagen 18, die sich bereits im Förderabschnitt 14 befinden.

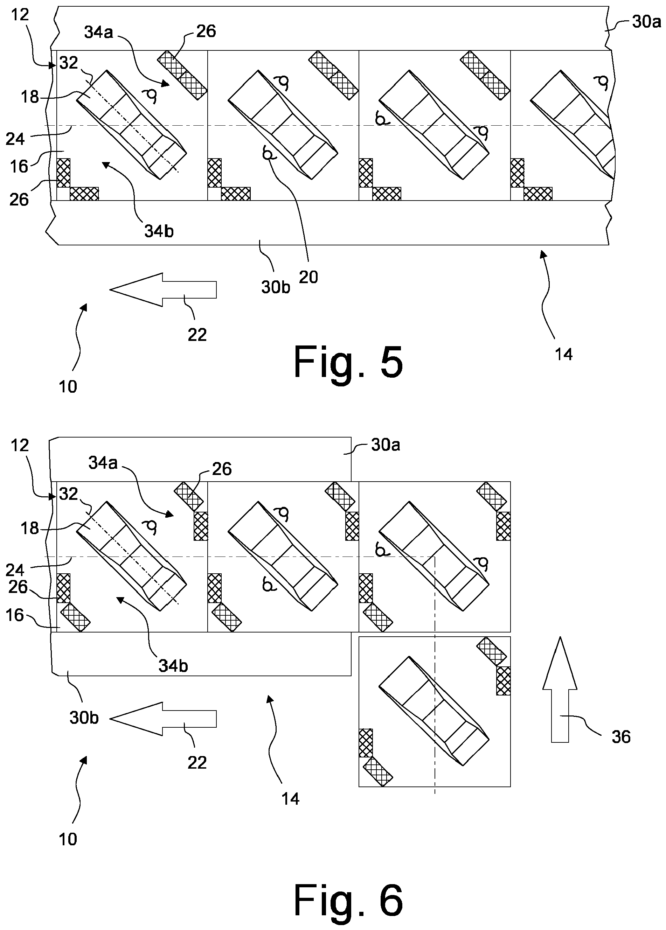

Die Figuren 5 und 6 zeigen in einer an die Figuren 3 und 4 angelehnten Darstellung eine Variante des dort gezeigten Fördersystems, bei dem die Materialversorgungseinrichtungen 26 auf den Montageplattformen 16 anders angeordnet sind. Auch hier befinden sich die Materialversorgungseinrichtungen 26 in den Ecken der dreieckigen Arbeitsbereiche 34a, 34b. Die Wege, die von den Werkern 20 zwischen den Materialversorgungseinrichtungen 26 und den zu montierenden Kraftwagen 18 zurückgelegt werden müssen, sind bei dieser Variante etwas kürzer als bei den in den Figuren 3 und 4 gezeigten Ausführungsbeispiel. Die Anordnung der Materialversorgungseinrichtung 26 schräg oder senkrecht zur Förderrichtung 22 schränkt allerdings den Übertritt der Werker 20 auf benachbarte Montageplattformen 16 etwas ein.

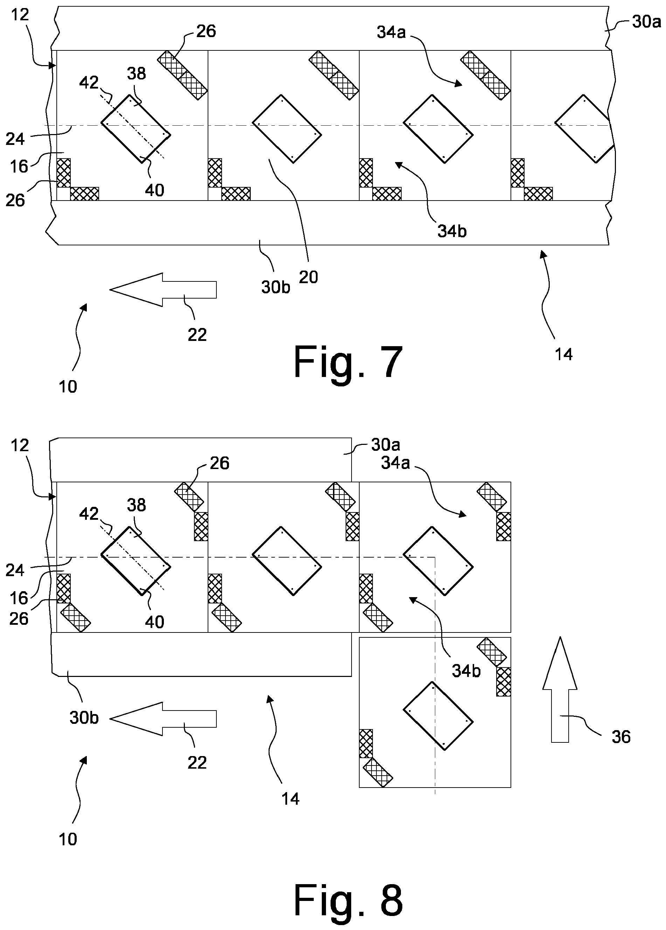

Die Figuren 7 und 8 zeigen die in den Figuren 5 bzw. 6 gezeigten Fördersysteme 10 in einer Draufsicht ohne die zu montierenden Kraftwagen 18. Dadurch sind Werkstückaufnahmen 38 erkennbar, die dazu eingerichtet sind, die Kraftwagen 18 zu tragen. Die Werkstückaufnahmen 38 können in der Art eines Hubtisches ausgebildet und dadurch höhenverstellbar sein, so dass die Werker die Kraftwagen 18 in unterschiedlichen Höhen bearbeiten können. Die Werkstückaufnahmen 38 verfügen im dargestellten Ausführungsbeispiel über jeweils 4 konische Ausnehmungen 40, in die komplementär geformte Vorsprünge eingreifen können, die an den Kraftwagen 18 oder an einem zusätzlichen Träger für die Kraftwagen 18 ausgebildet sind. Die Werkstückaufnahme 38 haben ebenfalls insgesamt die Form eines Rechtecks und eine Längsachse 42, die in einem Winkel von 45° zur Förderrichtung 22 verläuft und mit der Flächendiagonale der jeweiligen Montageplattformen fluchtet.

Falls an den Kraftwagen 18 die Räder bereits montiert sind, können die Kraftwagen auch direkt auf die Montageplattformen 16 gestellt werden. Eine zusätzliche Werkstückaufnahme 38 ist dann nicht erforderlich.

Die Förderfahrzeuge 12 mit den schräg darauf angeordneten Kraftwagen 18 können vorteilhaft auch in Fördersystemen eingesetzt werden, bei denen die Förderfahrzeuge keinen Verband bilden, in dem die Montageplattformen benachbarter Förderfahrzeuge zumindest im Wesentlichen spaltfrei aneinander angrenzen.

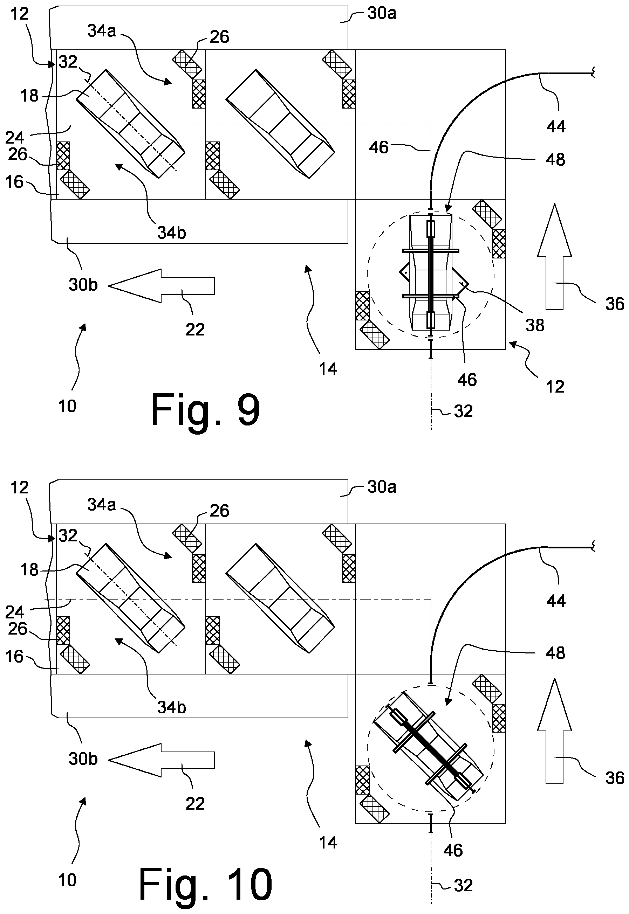

Die Figuren 9 und 10 zeigen in einer schematischen Draufsicht einen Anfangsbereich eines geradlinigen Förderabschnitts 14 zu zwei unterschiedlichen Zeitpunkten. Mit 44 ist die Schiene einer Elektrohängebahn angedeutet, die den Bereich überquert, in dem sich die Förderfahrzeuge 12 entlang der Querrichtung 36 bewegen. In diesem Bereich verläuft die Förderrichtung der Förderfahrzeuge 12 somit parallel zur Förderrichtung der Elektrohängebahn. Wie in der Figur 9 erkennbar ist, sind die Kraftwagen 18 so an Hängefahrzeugen 46 der Elektrohängebahn befestigt, dass die Längsrichtung 32 der Kraftwagen 18 mit der Schiene 44 fluchtet und damit parallel zur Förderrichtung der Elektrohängebahn verläuft.

In der Figur 9 ist die Orientierung des Kraftwagens 18 zu einem Zeitpunkt dargestellt, bevor der Kraftwagen 18 auf der Montageplattform 16 des bereitstehenden Förderfahrzeugs 12 abgesetzt wird. Behielte man diese Orientierung des Kraftwagens 18 bei, so wäre dessen Längsachse 32 nach dem Eintritt in den geradlinigen Fertigungsabschnitt 14 senkrecht zur Förderrichtung 22 ausgerichtet, was unerwünscht ist.

Deswegen umfasst die Elektrohängebahn im Übergabebereich eine Dreheinrichtung 48, mit der sich ein Abschnitt der Schiene 44 gemeinsam mit dem daran hängenden Hängefahrzeug 46 um eine vertikale Achse drehen lässt. Der Drehwinkel ist so festgelegt, dass der Kraftwagen 18 nach Abschluss der Drehung genau in der gewünschten Schrägstellung auf der Werkstückaufnahme 38 abgesetzt werden kann. Die Förderfahrzeuge 12 müssen bei diesem Ausführungsbeispiel somit nicht selbst über Dreheinheiten verfügen, mit denen die Werkstückaufnahme 38 gedreht werden kann.

Eine gleichartige Dreheinrichtung kann auch in einem Übergabebereich am Ende des Förderabschnitts 14 vorgesehen sein, wenn dort die Kraftwagen 18 wieder von den Förderfahrzeugen 12 abgenommen und mit einer anderen Fördereinrichtung weitertransportiert werden sollen.

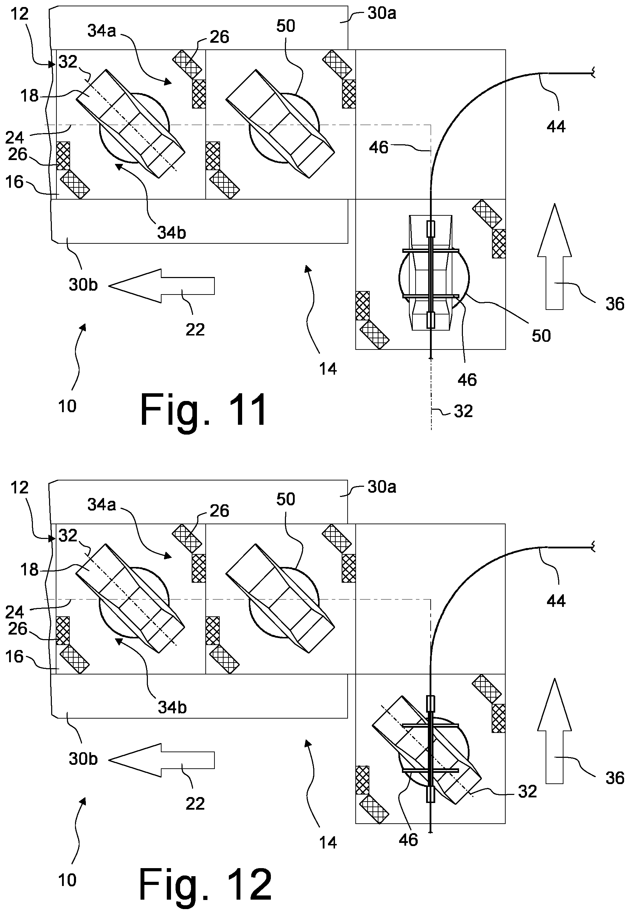

Die Figuren 11 und 12 zeigen in einer schematischen Draufsicht einen Anfangsbereich eines geradlinigen Förderabschnitts 14 zu zwei unterschiedlichen Zeitpunkten gemäß einem anderen Ausführungsbeispiel. Dort ist keine zentrale Dreheinrichtung vorgesehen. Stattdessen verfügen die Förderfahrzeuge 12 über Werkstückaufnahmen 38, die jeweils um eine vertikale Achse motorisch oder manuell drehbar sind. Die Endpositionen der Werkstückaufnahmen 38 sollten verriegelbar sein, um eine unbeabsichtigte Drehung zu verhindern.

Die Werkstückaufnahmen 38 sind zum Zwecke der Drehbarkeit bei dem dargestellten Ausführungsbeispiel jeweils von einem Drehteller 50 getragen, der in die Montageplattform 16 eingelassen ist. Infolge der Drehbarkeit der Werkstückaufnahmen 38 kann ein darauf befestigter Kraftwagen 18 jederzeit so weit gedreht werden, bis er die gewünschte Schrägstellung auf der jeweiligen Montageplattform 16 erreicht, wie dies in der Figur 12 erkennbar ist. Bei der Übergabe des Kraftwagens 18 von dem Hängefahrzeug 46 auf das Förderfahrzeug 12 wird der Kraftwagen 18 deswegen von dem Hängefahrzeug 46 in der in der Figur 11 gezeigten Orientierung abgesenkt und auf der Werkstückaufnahme 38 befestigt. Die Werkstückaufnahme 38 wurde zuvor in eine Drehstellung überführt, in der die Längsachse der Werkstückaufnahme parallel zur Förderrichtung 36 der Elektrohängebahn ausgerichtet ist. Anschließend wird die Werkstückaufnahme um 45° gegen den Uhrzeigersinn, wodurch der Kraftwagen 18 in die gewünschte Schrägstellung überführt wird.

In einer weiteren Variante (nicht dargestellt) sind nicht die Förderfahrzeuge 12, sondern die Hängefahrzeuge 46 mit einer Dreheinrichtung ausgerüstet, mit der die Werkstücke 18 um eine vertikale Achse gedreht werden können.

## Patentansprüche

1. Verfahren zum gleichzeitigen Transport von langgestreckten Werkstücken (18) und Werkern (20) in einer Fertigungslinie, die einen geradlinigen Fertigungsabschnitt (14) aufweist, wobei mehrere Förderfahrzeuge (12), die jeweils eine sich über die gesamte Fahrzeuglänge hinweg erstreckende und für Werker begehbare Montageplattform (16) haben, sich in dem geradlinigen Fertigungsabschnitt (14) gemeinsam entlang einer Förderrichtung (22) bewegen und einen Verband bilden, bei dem die Montageplattformen (16) benachbarter Förderfahrzeuge (12) zumindest im Wesentlichen spaltfrei aneinander angrenzen,
**dadurch gekennzeichnet, dass**
die Werkstücke (18) so auf den Montageplattformen (16) angeordnet werden, dass eine Längsrichtung (32) der Werkstücke (18) in einem Winkel zwischen 25° und 65° zur Förderrichtung (22) angeordnet ist.

2. Verfahren nach Anspruch 1, **dadurch gekennzeichnet, dass** die Werkstücke (18) so auf den Montageplattformen (16) angeordnet werden, dass eine Längsrichtung (32) der Werkstücke (18) in einem Winkel zwischen 40° und 50° zur Förderrichtung (22) angeordnet ist.

3. Verfahren nach Anspruch 1 oder 2, **dadurch gekennzeichnet, dass** die Werkstücke zu montierende Kraftwagen (18) sind.

4. Verfahren nach einem der vorhergehenden Ansprüche, **dadurch gekennzeichnet, dass** in dem geradlinigen Förderabschnitt (14) die Längsachsen (32) der Werkstücke (18) parallel zueinander angeordnet sind.

5. Fördersystem (10) zum gleichzeitigen Transport von langgestreckten Werkstücken (18) und Werkern (20) in einer Fertigungslinie, die einen geradlinigen Fertigungsabschnitt (14) aufweist, wobei das Fördersystem mehrere Förderfahrzeuge (12) aufweist, die jeweils eine Werkstückaufnahme (38) und eine sich über die gesamte Fahrzeuglänge hinweg erstreckende und für Werker begehbare Montageplattform (16) haben, und wobei sich die Förderfahrzeuge (12) in dem geradlinigen Fertigungsabschnitt (14) gemeinsam entlang einer Förderrichtung (22) bewegen und einen Verband bilden, bei dem die Montageplattformen (16) benachbarter Förderfahrzeuge (12) zumindest im Wesentlichen spaltfrei aneinander angrenzen,
**dadurch gekennzeichnet, dass**
die Werkstückaufnahme (38) so ausgebildet ist, dass eine Längsrichtung (32) des darauf zu befestigenden Werkstücks (18) in einem Winkel zwischen 25° und 65° zur Förderrichtung (22) angeordnet ist.

6. Fördersystem nach Anspruch 5, **dadurch gekennzeichnet, dass** die Werkstückaufnahme (38) so ausgebildet ist, dass die Längsrichtung (32) des darauf zu befestigenden Werkstücks (18) in einem Winkel zwischen 40° und 50° zur Förderrichtung (22) angeordnet ist.

7. Fördersystem nach Anspruch 5 oder 6, **dadurch gekennzeichnet, dass** die Werkstückaufnahme (38) eine Längsrichtung (42) hat, die in einem Winkel zwischen 25° und 65° zur Förderrichtung (22) angeordnet ist.

8. Fördersystem nach einem der Ansprüche 5 bis 7, **dadurch gekennzeichnet, dass** die Montageplattform (16) die Form eines Rechtecks mit einem Aspektverhältnis V mit V < 1,2 hat.

9. Fördersystem nach einem der Ansprüche 5 bis 8, **dadurch gekennzeichnet, dass** die Montageplattform (16) durch die Längsachse (32) des Werkstücks (18) in zwei Arbeitsbereiche (34a, 34b) unterteilt wird, die zumindest im Wesentlichen dreieckig sind, und dass in jedem der beiden Arbeitsbereiche (34a, 34b) mindestens eine Materialversorgungseinrichtung (26) zur Aufbewahrung zu montierender Einzelteile und zu deren Entnahme durch den Werker (20) angeordnet ist.

10. Fördersystem nach einem der Ansprüche 5 bis 9, **dadurch gekennzeichnet, dass** in dem geradlinigen Förderabschnitt (14) die Längsachsen (32) der Werkstücke (18) parallel zueinander angeordnet sind.

11. Fördersystem nach einem der Ansprüche 5 bis 10, **dadurch gekennzeichnet, dass** die Werkstückaufnahme (38) um eine vertikale Achse drehbar ist.

12. Fördersystem nach einem der Ansprüche 5 bis 11, **dadurch gekennzeichnet, dass** das Fördersystem aufweist:
a) eine Förderstrecke, in der die Werkstücke (18) entlang einer weiteren Förderrichtung (36) so gefördert werden, dass die Längsrichtungen (32) der Werkstücke (18) parallel zu der weiteren Förderrichtung (36) ausgerichtet sind, und
b) eine Dreheinrichtung (48), die dazu eingerichtet ist, das Werkstück (18) um eine vertikale Achse zu drehen, bevor es auf der Werkstückaufnahme (38) befestigt wird.
